# FASCICULE DE BREVET EUROPEEN

(11) **EP 2 126 216 B1**
(45) Date de publication et mention de la délivrance du brevet: **20.02.2013**
(21) Numéro de dépôt: 07855606.5
(22) Date de dépôt: 20.12.2007
(51) Int. Cl.: B29C 70/88, C08J 5/04, E01B 9/00, E01B 9/46, E01B 9/28

(54) **CRAPAUD ANTICORROSIF ISOLANT ET COMPOSÉ INTÉGRALEMENT D'UNE COMPOSITION POLYMÈRIQUE**
AUS EINER POLYMEREN ZUSAMMENSETZUNG INTEGRAL HERGESTELLTE ISOLIERENDE, KORROSIONSBESTÄNDIGE SCHIENENKLEMME
INSULATING ANTI-CORROSIVE RAIL CLAMP INTEGRALLY MADE OF A POLYMERIC COMPOSITION

(30) Priorité: 05.01.2007 CA 2572807
(43) Date de publication de la demande: 02.12.2009
(73) Titulaire: Pultrusion Technique Inc., Saint-Bruno, Québec J3V 6B9 (CA)
(72) Inventeur: DUFRESNE, Robert, P., Saint-Bruno, Québec J3V 6B9 (CA)
(74) Mandataire: Ponti Sales, Adelaida
(86) Numéro de dépôt international: PCT/CA2007/002324
(87) Numéro de publication internationale: WO 2008/080219

(56) Documents cités:
- CA-A1- 1 046 034
- CA-A1- 1 076 082
- FR-A1- 2 419 353
- FR-A1- 2 634 801
- GB-A- 990 895
- US-A- 3 658 247
- US-A- 4 635 846
- US-B2- 6 923 381

## Description

### DOMAINE DE L'INVENTION

La présente invention appartient au domaine des équipements de voie ferrée, et concerne plus particulièrement un crapaud utilisable dans un système de fixation de rails, selon la préambule de la revendication 1 (voir par exemple GB-A-990895).

### HISTORIQUE

Il est connu que les équipements de voie ferrée doivent supporter et guider les véhicules ferroviaires qui circulent dans des réseaux de transport. Des supports isolants, appelés dans le domaine « crapauds », sont utilisés dans des systèmes de fixation de rails à des radiers dans, par exemple, les métros de transport public.

Les crapauds servent à maintenir et à ancrer le rail dans la voie en béton armé. Pour être utilisables, les crapauds doivent présenter une grande résistance mécanique en flexion et, également, permettre l'isolation électrique du rail. De plus, lorsqu'un train passe, le crapaud doit plier quelque peu, c'est-à-dire, il doit créer un mouvement pour que le rail puisse lever un petit peu.

A cause des exigences mécaniques et diélectriques ci-dessus mentionnées, les crapauds ont jusqu'à présent été construits exclusivement en acier et caoutchouc. Ils sont constitués d'un corps métallique recouvert partiellement de caoutchouc isolant, et optionnellement d'un vernis. L'acier du crapaud est coulé dans des fonderies, les coutures de la pièce créées par le moule étant enlevées par débourrage ou tomblage, ou par un autre procédé standard. L'acier a souvent un module de rigidité de 10 à 20 million de psi. La surface de l'acier où doit être posé le caoutchouc est préparée selon des procédures spécifiées. Très souvent, on doit utiliser un apprêt posé avant de vulcaniser le caoutchouc moulé sur la pièce métallique.

Le procédé pour fabriquer des crapauds en deux pièces comprend plusieurs étapes de fabrication, préparation et consolidation, ce qui augmente le temps et les coûts de production.

De plus, les crapauds faits d'acier et de caoutchouc sont susceptibles à la rouille, qui mène à la séparation et l'éventuel détachement en partie des composants. Les métros sont souvent souterrains, ce qui est habituellement un environnement humide. En conséquence, les crapauds en deux pièces à base d'acier et caoutchouc sont très susceptibles à la rouille. La rouille est spécifiquement plus rapide dans les endroits où les tensions de surface sont les plus élevées, i.e. à la surface de contact entre le caoutchouc et l'acier. De plus, lorsque les voies ferriques sont installées à l'extérieur, elles sont exposées à la pluie, qui peut aggraver la rouille et mener à des fuites d'électricité.

Un sérieux problème rencontré avec l'utilisation de ce genre de crapauds de matériaux combinés en couches distinctes, est que lorsque la rouille a atteint une certaine quantité de surface entre le caoutchouc et l'acier, le caoutchouc se décolle de l'acier. Ce décollage peut créer un court circuit. Les crapauds connus dans le domaine comprennent des parties métalliques qui sont conductrices et constituent les propriétés mécaniques structurales de la pièce crapaud.

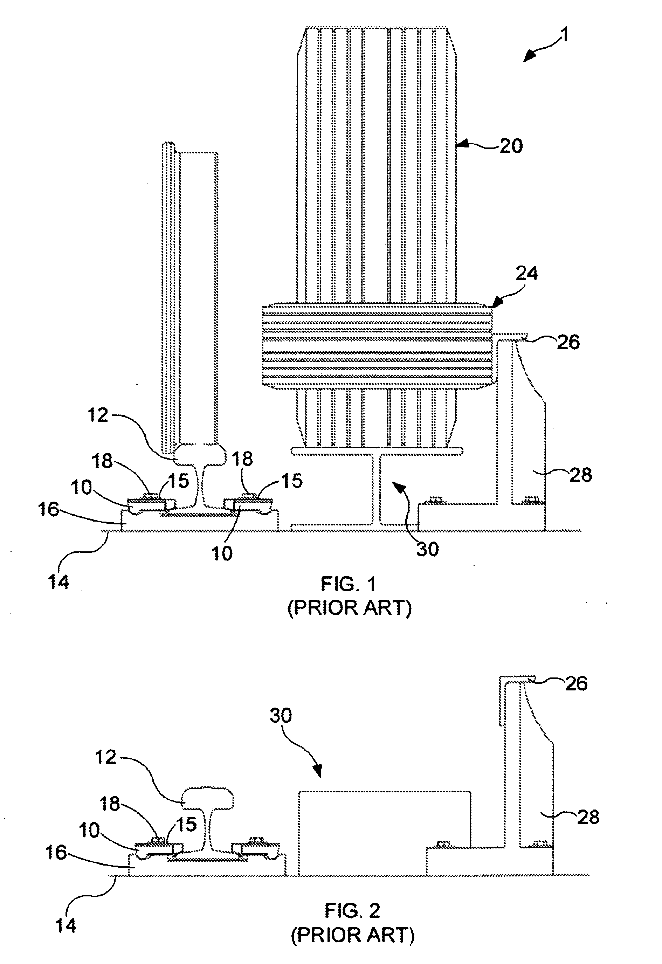

Des crapauds sont souvent utilisés dans des systèmes de voie tels que montrés aux Figures 1 et 2. Ces Figures montrent un côté à voie (1) avec un rail (12). Des crapauds (10) s'y trouvent pour fixer le rail (12) à un radier (14).

Tel qu'il est illustré, le crapaud (10) sert à maintenir le rail (12) à une selle isolante (16) ou directement au radier (14). De préférence, le rail (12) est disposé dans une selle isolante (16). Les crapauds (10) sont donc placés pour chevaucher la partie du rail (12) dans la selle isolante (16) et le rebord de la selle. Avantageusement, les crapauds (10) tiennent le rail (12) à la selle (16) par l'entremise de vis (18) qui passe à travers le crapaud (10) et la selle (16). La vis (18) peut être un boulon maintenu à l'aide d'un écrou (15). Le crapaud (10) fixe donc le rail (12) en place comme une pince.

D'autres éléments du système à voie sont la roue porteuse (20); une roue de guidage (24); un bar de guidage (26); des isolateurs (28); et une piste de roulement (30) (en acier tel qu'apparaissant sur la Figure 1 ou en béton tel qu'apparaissant sur la Figure 2).

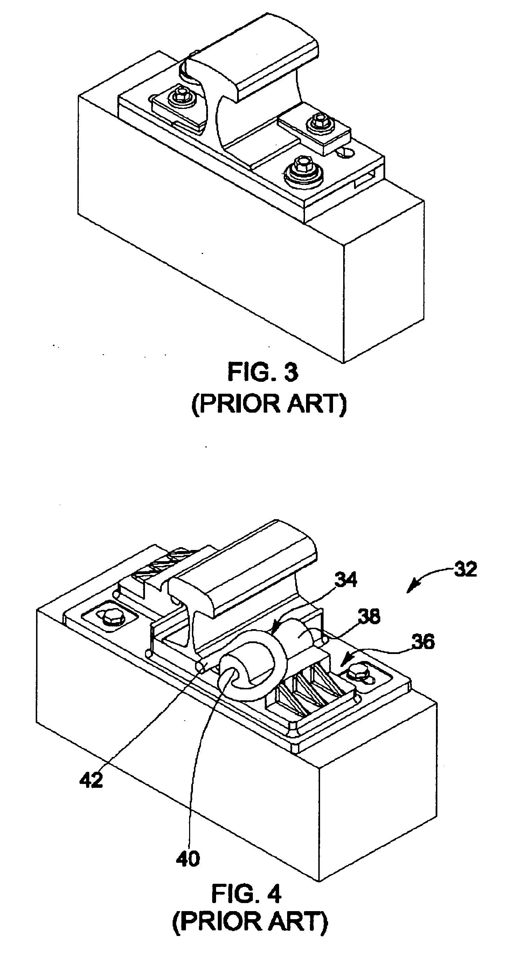

La Figure 3 montre que les crapauds peuvent être décalés les uns des autres pour fixer le rail.

Un autre type de crapaud utilisé pour maintenir un rail au radier est un crapaud dit « à broche », qui est construit en deux pièces et qui fait partie du système de voie « à broche » tel que montré à la Figure 4.

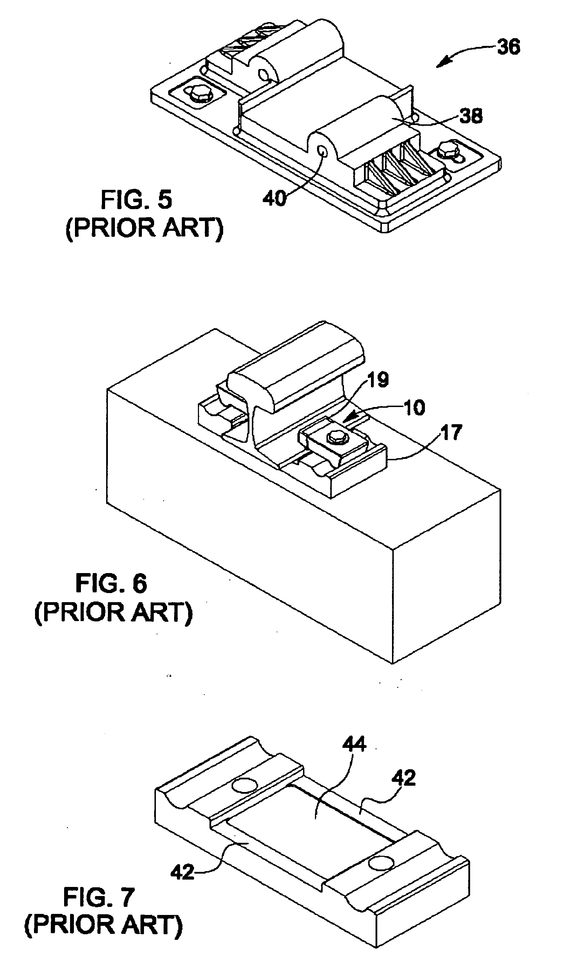

Le système à broche (32) comprend un crapaud « à broche » (34) ainsi qu'une selle adaptée (36) ayant une partie inférieure (38) munie d'un trou (40). Le crapaud à broche (34) agit en effet comme un élément de broche, normalement en forme de pince hélicoïdale comprenant un premier bout, un deuxième bout et un point de levier entre ceux-ci. Le premier bout est inséré dans le trou (40) de la partie inférieure, le deuxième bout (42) s'appuie sur le rail pendant que le point de levier s'appuie sur la partie inférieure (38), permettant que le rail soit cramponné au radier. La Figure 5 montre la selle adaptée (36) utilisée dans ce système de voie.

La partie inférieure (38) de la selle adaptée (36) est normalement construite d'un matériau isolant tel qu'un polymère, tandis que l'élément de broche (34) est souvent métallique. Il y a donc toujours une construction combinée qui peut mener à des problèmes de rouille et de séparation. De plus, ce système de crapaud à broche comprend des éléments métalliques qui sont conducteurs d'électricité et/ou des composantes combinées, ce qui mène à des problèmes et difficultés de sécurité des travailleurs et du public.

Le système de crapaud à broche est dispendieux, et implique des difficultés d'installation et d'inspection.

La Figure 6 montre un système de voie dans lequel un crapaud selon l'art antérieur est utilisé. Ce crapaud comprend un corps en acier (17), et un revêtement de caoutchouc (19) à un bout. La Figure 7 montre une selle ayant des rebords (43) qui définit une rainure (44). On peut mettre du caoutchouc dans la rainure (44) afin d'être en contact avec le rail, optionnellement pour diminuer des vibrations. Cette forme de selle demande souvent une fabrication par compression.

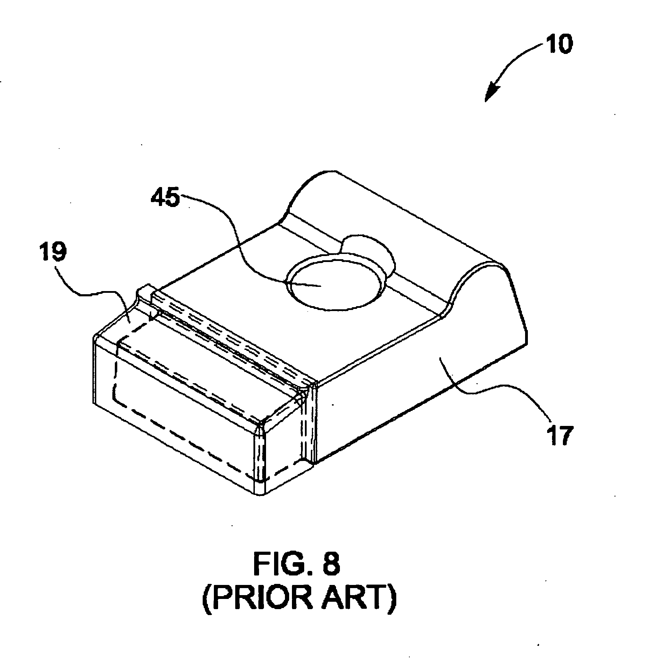

La Figure 8 montre un crapaud connu. Ce crapaud (10) comprend un corps en acier (17) ayant un trou (45), et un revêtement de caoutchouc (19).

Le courant utilisé dans ces systèmes est souvent de 748 à 778 volts. Travailler avec ces hauts voltages est très dangereux et la surveillance de ces crapauds est donc très importante, ardue et dispendieuse.

### SOMMAIRE DE L'INVENTION

La présente invention a pour objet de régler les problèmes ci-dessus rappelés.

Plus précisément, l'invention concerne un crapaud pour fixer des équipements de voie, ledit crapaud étant anticorrosif, isolant et composé intégralement d'une composition polymérique produit par pultrusion, par moulage, par coulage, par compression, par enroulement ou par bobinage.

Selon l'invention, le crapaud est formé d'une seule pièce.

Selon l'invention, le crapaud est composé d'un polymère en composite, le polymère comprenant :
- une résine de synthèse; et
- des fibres de renforcement.

Préférablement, la résine est choisie parmi les époxy, les polyesters, les vinyles ester, et les uréthanes. Préférablement aussi, les fibres sont choisies parmi le verre, l'aramide, la céramique, le carton, le carton en corde, le sisal, le cristal, le coton, le lin et le chanvre.

Selon un deuxième mode de réalisation préféré, le crapaud comprend un polymère thermoplastique préférablement choisi parmi les polyesters, les poly acétals homopolymères et les polycarbonates.

L'invention concerne également un système de voie ferrique comprenant :
- un rail ayant une partie supérieure et une partie inférieure;
- au moins une selle pour supporter la partie inférieure du rail;
- au moins un crapaud tel que défini ci-dessus, le crapaud ayant une surface, la surface étant mise en contact avec la partie inférieure du rail et le crapaud étant fixée à la selle pour permettre une pression de la surface contre la partie inférieure du rail pour prévenir le déplacement substantiel du rail.

Du fait qu'il est composé intégralement d'une composition polymérique produit par pultrusion, par moulage sous vide, par moulage sous compression ou par une autre des méthodes susmentionnées, le crapaud selon l'invention n'est pas susceptible au problème de décollage que subissent les crapauds existants. Il a donc un avantage majeur par rapport à ceux-ci tout en offrant des propriétés similairement acceptables. De plus, le crapaud selon l'invention n'est pas sujet à d'autres problèmes reliés à la construction combinée que subissent les crapauds connus.

Selon d'autres caractéristiques optionnelles le crapaud de l'invention présente:
- une dureté Barcol d'environ 40 à 50, et/ou,
- une résistivité électrique selon la norme ASTM D-229 au-dessus de 7 Ohm/cmx10¹², et/ou,
- un module d'élasticité entre 200,000 psi et 10,000,000 psi, et/ou,
- une résistance à la traction selon la norme ASTM D-638 entre 7000 et 120,000 psi, et/ou,
- une résistance à la compression selon la norme ASTM D-695 entre 12,000 et 70,000 psi, et/ou,
- une résistance au cisaillement d'au moins 2000 psi, et/ou,
- coefficient d'expansion thermique d'au plus 10X10⁻⁶ In/In/°F, et/ou,
- une constante diélectrique selon la norme ASTM D150 à 60Hz entre 4 et 7.

Afin de mieux comprendre l'invention et ses avantages, une description non limitative de divers modes de réalisation préférés sera présentée ci-dessous, en se référant aux dessins annexés.

### BRÈVE DESCRIPTION DES DESSINS

La Figure 1 (art antérieur) est un schéma montrant une vue en coupe transversale d'un côté d'une voie avec rail.
La Figure 2 (art antérieur) est un schéma montrant une vue en coupe transversale d'un côté d'une voie avec rail.
La Figure 3 (art antérieur) est un schéma montrant une vue en perspective d'un côté d'une voie avec rail.
La Figure 4 (art antérieur) est un schéma montrant une vue en perspective d'un crapaud à broche, dans un système à voie « à broche ».
La Figure 5 (art antérieur) est un schéma montrant une vue en perspective de la selle du système à voie de la Figure 4.
La Figure 6 (art antérieur) est un schéma montrant une vue en perspective d'un crapaud recouverte de caoutchouc dans un système à voie.
La Figure 7 (art antérieur) est un schéma montrant une vue en perspective de la selle du système à voie de la Figure 6.
La Figure 8 (art antérieur) est un schéma montrant une vue en perspective d'un crapaud fait en acier et en caoutchouc.
Les Figures 9a et 9b sont des schémas montrant une vue en perspective et une coupe transversale respectivement, d'un système à voie comprenant un rail fixé par des crapauds selon un mode de réalisation de l'invention.
La Figure 10 est un schéma montrant une vue en perspective de la selle du système à voie de la Figure 9a.

### DESCRIPTION DES MODES DE RÉALISATION PRÉFÉRÉS DE L'INVENTION

Le crapaud selon l'invention tout comme les crapauds existants est conçu pour maintenir des rails au radier dans un système de transport à voie ferrée, préférablement dans un métro. Le crapaud peut toutefois être utilisé pour fixer d'autres équipements de voie en place.

Cette invention permet d'éviter l'utilisation des parties métalliques, qui sont conductrices et constituent les propriétés mécaniques structurales de la pièce du crapaud. Le crapaud inventif est fabriqué d'un matériau polymérique intégral, et préférablement en une seule pièce. Ce crapaud substantiellement intégral remplace les crapauds en deux pièces hétérogènes. Ceci réduit les coûts d'achat de pièce, les coûts d'installation et d'utilisation.

La Figure 6 montre un crapaud (10) de type connu selon une première conception. Ce crapaud (10) est composé d'un corps en acier (17) et d'une couverture en caoutchouc (19). On montre aussi un système à voie.

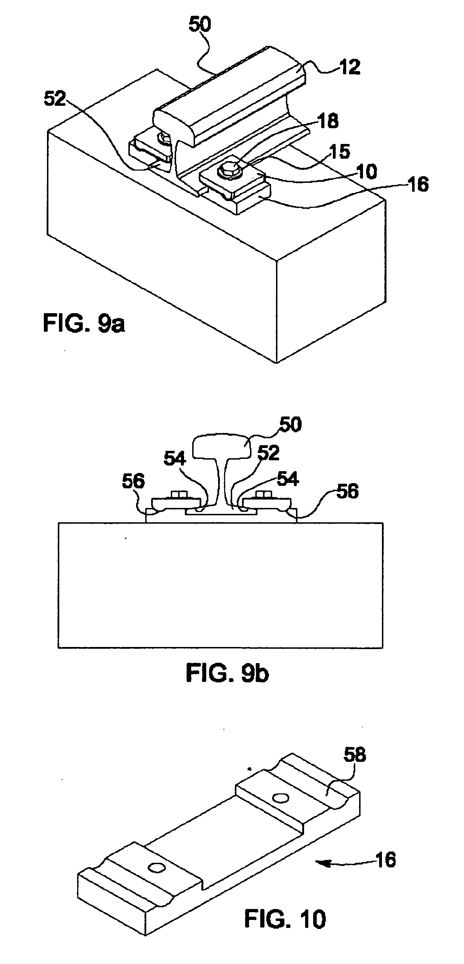

Le crapaud (10) selon l'invention tel que présenté à la Figure 9a se distingue notamment de l'art antérieur en ce qu'il est composé intégralement d'une composition polymérique produit de préférence par pultrusion ou par moulage sous compression.

De ce fait, le crapaud (10) selon l'invention a des propriétés anticorrosives et isolantes (diélectriques), ainsi que des propriétés mécaniques acceptables.

Cependant, le crapaud inventif n'est pas limité à la méthode de fabrication de la pultrusion, mais peut être fabriqué par d'autres procédés de moulage ou de fabrication de polymères, tels que le moulage en contact, le coulage par centrifugation, le bobinage, le moulage à la presse, entre autres méthodes de fabrication qui permettent de former un crapaud en polymère pour maintenir un rail en place. Il faut que la méthode de fabrication mène à un crapaud anticorrosif et diélectrique, ayant des propriétés mécaniques permettant de fixer des équipements de voie.

Tel qu'illustré sur la Figure 9a, le crapaud (10) selon un mode de réalisation préféré est pourvu d'un trou (46), comme les crapauds de l'art antérieur (tels que montrés, par exemple, à la Figure 6). Le trou (46) peut être machiné après que le crapaud (10) est pultrusé, ou bien formé lors de son moulage. Le trou (46) permet qu'une vis puisse le fixer en place. Cependant, le trou (46) n'est pas nécessaire si d'autres moyens d'attachement sont utilisés pour fixer le crapaud (10).

La forme du crapaud (10) permet le chevauchement du rail (12) et de la selle (16) de façon alignée. La pièce de crapaud (10) peut être machinée pour la former selon les exigences du système spécifique et des anciens équipements utilisés, mais elle pourrait avoir une autre forme présentant d'autres particularités de fixation.

Le crapaud (10) une fois installé doit, à la fois, être très fort mécaniquement, permettre une certaine souplesse, être résistant à la corrosion, et être diélectrique.

Un crapaud (10) ayant toutes ces caractéristiques a été fabriqué à partir d'un polymère par le procédé de pultrusion ou de moulage sous vide ou compression. Un seul polymère ou plusieurs polymères sont pultrudés pour former le crapaud (10). La pultrusion est aussi connue sous le nom d'extrusion par étirage, et permet d'obtenir des pièces en polymère avec les caractéristiques mécaniques désirées. Avantageusement, le crapaud isolant et anticorrosif est pultrudé en mono-pièce et ne requiert que des étapes de finition pour produire le produit final. Le crapaud (10) peut aussi être composé de deux ou plusieurs pièces pultrudées séparément, qui sont fixées ensemble avec des moyens de fixation (clous, vis, colle, moyens mécaniques, etc.), pour produire la pièce crapaud.

Dans un premier mode de réalisation de l'invention, le crapaud (10) est fabriqué à partir d'une résine et de plusieurs fibres. La pièce résultante est un composite. Les résines sont préférablement des époxy, des polyesters, des vinyles ester, et/ou uréthanes. Elles sont utilisées avec des fibres qui sont non-conductrices et peuvent être constituées de verre, d'aramide, de céramique, de carton, de cristal, de coton, de lin ou de chanvre. Préférablement; les crapauds sont armés de roving et/ou de mats, dépendant des propriétés mécaniques et électriques désirées.

Les fibres imprégnées de résine sont préférablement disposées expressément dans différents sens de façon à donner au crapaud la résistance mécanique requise. Les quantités, concentrations et orientations des fibres sont déterminées par une personne de l'art, pour que le crapaud réponde aux demandes mécaniques et électriques requises.

Dans un deuxième mode de réalisation préféré, la pièce crapaud (10) est faite en polymère comme des polyesters, des poly acétals homopolymères et/ou des polycarbonates thermoplastiques, ou autres polymères appropriés.

Les polymères peuvent être, préférablement, des polyesters non saturés.

Le crapaud selon l'invention possède une haute qualité mécanique et permet une isolation électrique et une résistance à la corrosion. Il est aussi non combustible et présente des propriétés de résistivité électrique, résistivité ou rupture à l'allongement; module d'élasticité; thermoplasticité et anticorrosion, entre autres, particulièrement désirables pour des applications sur des voies de métro.

Le crapaud est préférablement incorporé dans un système à voie. Etant donné qu'il existe une pluralité de systèmes à voie, le crapaud est préférablement fabriqué afin de s'adapter aux exigences du système sélectionné.

Le crapaud selon l'invention peut être, par exemple, incorporé dans les systèmes à voie décrits dans la section HISTORIQUE ci-dessus, mais peut également être utilisé dans d'autres systèmes à voie connus à une personne de l'art.

Le système selon l'invention, et tel que montré aux Figures 9a et 9b, comprend un rail (12) ayant une partie supérieure (50) et une partie inférieure (52). Le système comprend également une selle (16) pour supporter le rail (12) et le crapaud tel que défini ci-dessus. Le crapaud a une première surface (54) et une seconde surface (56). La première surface est mise en contact avec la partie inférieure (52) du rail (12) et la seconde surface est fixée à la selle (et ici, dans une rainure (58) de la selle) pour permettre une pression de la première surface (54) contre la partie inférieure (52) du rail (12) pour prévenir le déplacement substantiel du rail. Préférablement, le crapaud est simplement fixé à la selle, et est mis en contact avec la partie inférieure du rail à la première surface.

Tel que montré dans la Figures 9a, le crapaud et la selle peuvent avoir des courbures coopérantes. La courbure du crapaud est préférablement convexe, tandis que celle de la selle est concave. Cette coopération de courbures pourrait aider à maintenir le crapaud dans la bonne orientation relative au rail, en décourageant la rotation ou le déplacement de celui-ci sur le boulon, et à remettre le crapaud dans la bonne orientation après des légers déplacements du crapaud causés par le passage du train. Néanmoins, le crapaud pourrait aussi prendre la forme d'une simple plaque, sans courbures. Dans une telle réalisation, le boulon ou d'autres moyens de fixation fixerait le crapaud en place. Une construction en plaque faciliterait la production des crapauds.

Le crapaud selon l'invention est préférablement utilisé avec une selle telle que montrée à la Figure 10, et dans un système de voie tel que montré aux Figures 9a et 9b. La selle (16) montrée à la Figure 10 manque notamment des rebords (tels que les rebords (43) à la Figure 7), et peut donc être fabriquée plus facilement. De préférence, elle est fabriquée par pultrusion, ou par une autre méthode mentionnée ci-dessus. Préférablement, la selle est munie d'une rainure (58) sur chaque côté du rail, chaque rainure coopérant avec la seconde surface (56) du crapaud.

Selon la Figures 9a, le système selon l'invention comprend un rail (12), une selle (16) pour supporter le rail (12), et un crapaud tel que défini ci-dessus dans l'un quelconque des modes de réalisation préférés. Le crapaud est mis en contact avec le rail et la selle afin de coopérer pour prévenir un déplacement substantiel du rail. Préférablement, il y a plusieurs crapauds disposés le long du rail, et qui sont placés soit en décalé, soit en alignement les uns des autres. La distance entre les crapauds peut être déterminée par une personne versée dans l'art. Préférablement, la selle est fabriquée de la même manière que le crapaud.

Différentes sociétés de transport ont différentes exigences en tant qu'équipements de voies, et plus particulièrement pour les crapauds. Bien que les propriétés suivantes aient été mesurées, le crapaud selon l'invention n'est pas limité aux gammes de données ci-dessous. Le crapaud peut démontrer plusieurs combinaisons de propriétés mécaniques et électriques, qui le rendent adéquat pour application et fixation des équipements de voie, et qui sont bien connues à l'Homme de l'art.

De plus, les propriétés nécessaires pour que le crapaud puisse fixer le rail en place dépendent de la conception du crapaud, c'est-à-dire, le mode de réalisation ainsi que les aspects préférés de l'invention. Par exemple, si on envisage un crapaud à broche, il faut que l'élément de broche ait la flexibilité pour permettre à la broche de cramponner au rail. On peut prévoir que l'élément de broche agisse comme un ressort ou qu'il soit plus rigide, tout dépendant du mode de réalisation préféré du crapaud.

Les données suivantes concernent les propriétés de profilés pultrudées armées de mats et de rowings :

| **PROPRIÉTÉS DE PROFILÉS PULTRUDÉES ARMÉES DE MATS *** | | | | | | |
|---|---|---|---|---|---|---|
| Résine polyester : Haute température de distorsion, isopthalique antiacide. | | | | | | |
| | | | | | | |

| **PROPRIÉTÉ** | **NORME ASTM** | **UNITÉ** | **35 à 45% Lg.** | **VERRE Tr.** | **45 à 55% Lg.** | **VERRE Tr.** |
|---|---|---|---|---|---|---|
| Tension | D-638 | psiX10³ | 30 | 7 | 45 | 9 |
| Module (T) | | psiX10⁶ | 2,3 | 0,8 | 2,5 | 1 |
| Flexion | D-790 | psiX10³ | 30 | 10 | 45 | 15 |
| Module (F) | | psiX10⁶ | 1,3 | 0,6 | 1,8 | 0,8 |
| Compression | D-695 | psiX10³ | 20 | 12 | 30 | 15 |
| Module (C) | | psiX10⁶ | 2,3 | 0,8 | 2,5 | 1 |
| Contrainte de portage | | psiX10³ | 137,8 | 137,8 | 206,7 | 206,7 |
| Impact izode | D-256 | ft-Ibs/in | 20 | 4 | 28 | 4 |
| Dureté Barcol | | | 50 | | 50 | |
| Résistance au cisaillement | | psiX10³ | 4,5 | 4,5 | 5,5 | 5,5 |
| Torque | | psi | nil | nil | nil | nil |
| Rigidité diélectrique (perp. Huile) | D-149 | V/mil | 200 | 25 | 200 | 35 |
| Constante diélectrique | D-150 | 60Hz | 4,5 | | 4,8 | |
| Perte diélectrique | D-669 | Température pièce | 0,04 | | 0,04 | |
| Arc | D-495 | Sec. | 80 | | 120 | |
| Densité | | Ibs/in cu. | 0,060 | | 0,064 | |
| Poids spécifique | | Ibs/in cu. | 1,68 | | 1,75 | |
| Chaleur spécifique | | Btu/Ib/°F | 0,862 | | 0,862 | |
| Coefficient d'expansion thermique | | In/In/°F | 4.4X10⁻⁶ | | 4,4X10⁻⁶ | |
| Conductivité thermique | | Btu in/H ft² °F | 2 | | 2 | |
| Absorption d'eau | D-570 | Max.% | 0,7 | | 0,6 | |
| Inflammabilité | | | nil | nil | nil | nil |
| 1- Chargement typique pour profilé standard | | | | | | |
| 2- Construction améliorée pour application spécifique | | | | | | |

| | | | | | | |
|---|---|---|---|---|---|---|
| *La pultrusion donne lieu à des matériaux orthotropiques; Lg = longitudinal; Tr = transversal, selon l'axe linéaire de l'extrusion. | | | | | | |

Les données ci-dessous concernent les propriétés de tiges pultrudées armées uniquement de rowings:

| **PROPRIÉTÉS DE TIGES PULTRUDÉES ARMÉES DE ROVING : GRADE ÉLECTRIQUE** | | | | |
|---|---|---|---|---|
| Résine polyester : Haute température de distorsion, isophtalique antiacide | | | | |
| **PROPRIÉTÉ** | **NORME** | **UNITÉ** | **65 à 70%** | **70 à 75%** |
| Tension | D-638 | MPa | 585 | 690 |
| Module (T) | | GPa | 41,340 | 44,780 |
| Flexion | D-790 | MPa | 585 | 690 |
| Module (F) | | GPa | 41,340 | 44,780 |
| Compression | D-695 | MPa | 413 | 482 |
| Module (C) | | GPa | 15,850 | 17,220 |
| Cisaille | | | nil | nil |
| Impact izode | D-265 | KPa cm/cm² | 840 | 1,050 |
| Torque | | MPa | 34,4 | 37,9 |
| Absorption d'eau | D-570 | % | 0,10 | 0,09 |
| Dureté Barcol | | | 50 | 50 |
| Pression de la bille | | | nil | nil |
| Perte de poids | | | | |
| 1.000 h. 200°C | | % | 2,40 | 2,40 |
| Densité | | g./cm³ | 2,05 | 2,05 |
| Conductivité thermique | | Kcal.m/m²h°C | 0,26 | 0,26 |
| Conductivité thermique | | Kcal.m/m²h°C | 0,26 | 0,26 |
| Coefficient d'expansion thermique | | Mm/mm/°c | 5,4X10⁻⁶ | 5,4X10⁻⁶ |
| Température de distorsion à 1819 KPa | D-648 | °C | 260 | 280 |
| Arc | D-495 | sec. | 180 | 180 |
| Rigidité diélectrique (perp. Huile) | D-149 | KV/mm | 17 | 17,7 |
| Constante diélectrique | D-150 | | 5,39 | 5,7 |
| Perte diélectrique | D-669 | 23°C% | 1,01 | 1,01 |
| Tang. (delta) 60Hz | | 100% | 4,35 | 4,00 |
| Résistivité | D-229 | Ohm/cmX10¹⁴ | 9 | 9,4 |
| Ininflammabilité | | | nil | nil |

Préférablement, les crapauds sont fabriqués afin d'être conformes à des exigences typiquement demandées par des sociétés de transport.

| **PROPRIÉTÉ** | **NORME** | **EXIGENCE** |
|---|---|---|
| Combustibilité | Méthode 1 de la norme NFPA 701 | Non combustible |
| Résistivité après immersion | ASTM D 257, Tension de 500 Vcc | Minimum 1600 mégohms cm |
| Résistivité après immersion | ASTM D 259, Tension de 500 Vcc (éprouvette immergée 48 heures dans un bain d'eau) | Minimum 1600 mégohms cm |
| Dureté | ASTM D2240 avec duromètre shore A | Min : 70 shore A |

Bien que des modes de réalisation préférés de l'invention aient été décrits ci-haut et illustrés dans les dessins, l'invention n'est pas limitée à ces modes de réalisation et plusieurs changements et modifications pourraient être effectué par une personne du métier, sans sortir du cadre ni de l'esprit de l'invention comme défini dans les revendications (forme du crapaud, orientation du trou, autres polymères et composites pultrusés, etc.). Son utilité n'est pas non plus restreinte au secteur des transports publics. Une telle pièce pourrait très bien s'appliquer dans différents domaines d'applications industrielles, ainsi que tout transport ferroviaire.

## Revendications

1. Un crapaud (10) pour fixer des équipements de voie, ledit crapaud (10) étant anticorrosif, isolant et composé intégralement d'une composition polymérique produit par pultrusion par moulage, par couplage, par enroulement ou par bobinage et est formé d'une seule pièce; **caractérisé en ce que** la composition polymérique est un composite comprenant :
- une résine de synthèse; et
- des fibres de renforcement.

2. Le crapaud selon la revendication 1, **caractérisé en ce que** la résine est choisie parmi les époxy, les polyesters, les vinyle esters et les uréthanes.

3. Le crapaud selon la revendication 1 ou 2, **caractérisé en ce que** les fibres sont choisies parmi le verre, l'aramide, la céramique, le carton, le carton en corde, le sisal, le coton, le lin et le chanvre.

4. Le crapaud selon l'une quelconque des revendications 1 à 3, **caractérisé en ce que** les fibres de renforcement sont en forme de roving ou de mat.

5. Le crapaud selon l'une quelconque des revendications 1 à 4, **caractérisé en ce que** la composition polymérique comprend un polymère choisi parmi les polyesters, les poly acétals homopolymères et les polycarbonates.

6. Le crapaud selon l'une quelconque des revendications 1 à 5, **caractérisé en ce qu'**il est pourvu d'un trou pour permettre le passage d'un moyen de fixation.

7. Le crapaud selon l'une quelconque des revendications 1 à 6, **caractérisé en ce qu'**il présente une dureté Barcol d'environ 40 à 50.

8. Le crapaud selon l'une quelconque des revendications 1 à 7, **caractérisé en ce qu'**il présente une résistivité électrique selon la norme ASTM D-229 au-dessus de 7 Ohm/cmx10¹².

9. Le crapaud selon l'une quelconque des revendications 1 à 8, **caractérisé en ce qu'**il présente un module d'élasticité entre 200,000 psi et 10,000,000 psi.

10. Le crapaud selon l'une quelconque des revendications 1 à 9, **caractérisé en ce qu'**il présente une résistance à la traction selon la norme ASTM D-638 entre 7000 et 120,000 psi.

11. Le crapaud selon l'une quelconque des revendications 1 à 10, **caractérisé en ce qu'**il présente une résistance à la compression selon la norme ASTM D-695 entre 12,000 et 70,000 psi.

12. Le crapaud selon l'une quelconque des revendications 1 à 11, **caractérisé en ce qu'**il présente une résistance au cisaillement d'au moins 2000 psi.

13. Le crapaud selon l'une quelconque des revendications 1 à 12, **caractérisé en ce qu'**il présente un coefficient d'expansion thermique d'au plus 10X10⁻⁶ In/In/°F.

14. Le crapaud selon l'une quelconque des revendications 1 à 13, **caractérisé en ce qu'**il présente une constante diélectrique selon la norme ASTM D150 à 60Hz entre 4 et 7.

15. Un système de voie ferrique comprenant :
- un rail (12) ayant une partie supérieure et une partie inférieure (52) ;
- au moins une selle (16) pour supporter la partie inférieure (52) du rail (12);
- le système de voie ferrique étant **caractérisé en ce qu'**il comprend au moins un crapaud (10) tel que défini dans l'une quelconque des revendications 1 à 14, le crapaud (10) ayant une surface, la surface étant mise en contact avec la partie inférieure (52) du rail (12) et le crapaud (10) tant fixée à la selle (16) pour permettre une pression de la surface contre la partie inférieure (52) du rail (12) pour prévenir le déplacement substantiel du rail (12).

16. Le système selon la revendication 15, **caractérisé en ce que** le au moins un crapaud comprend une première pluralité de crapauds et une deuxième pluralité de crapauds, la première pluralité de crapauds étant disposée sur un premier côté latéral du rail et la deuxième pluralité de crapauds étant disposée sur un deuxième côté latéral du rail.

17. Le système selon la revendication 16, **caractérisé en ce que** chaque crapaud de la première pluralité de crapauds est décalé relatif à un crapaud correspondant de la deuxième pluralité de crapauds.

18. Le système selon la revendication 17, **caractérisé en ce que** la selle est anticorrosive, isolante et composée intégralement d'une deuxième composition polymérique produit par pultrusion, par moulage, par coulage, par enroulement ou par bobinage.

## Claims

1. A rail clamp (10) for fastening railway equipment, **characterized in that** said rail clamp (10) is anticorrosive, insulating and integrally composed of a polymeric composition made by pultrusion, molding, casting, filament winding or winding and is formed in one piece; and **characterized in that** the polymeric composition is a composite comprising:
- a synthetic resin; and
- reinforcing fibers.

2. The rail clamp according to claim 1, **characterized in that** the synthetic resin is chosen from epoxies, polyesters, vinyl esters and urethanes.

3. The rail clamp according to claim 1 or 2, **characterized in that** the reinforcing fibers are chosen from glass, aramid, ceramic, cardboard, filamented cardboard, sisal, cotton, flax and hemp.

4. The rail clamp according to any one of claims 1 to 3, **characterized in that** the reinforcing fibers are shaped as roving or mat.

5. The rail clamp according to any one of claims 1 to 4, **characterized in that** the polymeric composition comprises a polymer chosen from polyesters, polyacetalhomopolymers and polycarbonates.

6. The rail clamp according to any one of claims 1 to 5, **characterized in that** the rail clamp is provided with a hole to allow passage of a fastener.

7. The rail clamp according to any one of claims 1 to 6, **characterized in that** the rail clamp has a Barcol hardness from about 40 to about 50.

8. The rail clamp according to any one of claims 1 to 7, **characterized in that** the rail clamp has an electrical resistance, according to the ASTM D-229 norm, higher than 7 Ohm/cmx10¹².

9. The rail clamp according to any one of claims 1 to 8, **characterized in that** the rail clamp has a modulus of elasticity between 200,000 psi and 10,000,000 psi.

10. The rail clamp according to any one of claims 1 to 9, **characterized in that** the rail clamp has a tensile strength, according to the ASTM D-638 norm, between 7,000 psi and 120,000 psi.

11. The rail clamp according to any one of claims 1 to 10, **characterized in that** the rail clamp has a compression strength, according to the ASTM D 695 norm, between 12,000 psi and 70,000 psi.

12. The rail clamp according to any one of claims 1 to 11, **characterized in that** the rail clamp has a shearing strength of at least 2,000 psi.

13. The rail clamp according to any one of claims 1 to 12, **characterized in that** the rail clamp has a thermal expansion coefficient of at most 10x10⁻⁶ ln/ln/°F.

14. The rail clamp according to any one of claims 1 to 13, **characterized in that** the rail clamp has a dielectric constant, according to the ASTM D150norm at 60 Hz, between 4 and 7.

15. A railway system comprising:
- a rail (12) having an upper section (50) and a lower section (52);
- at least one rail road saddle (16) for supporting the lower section (52) of the rail (12);
- the railway system being **characterized in that** the railway system comprises atleast one rail clamp (10) as defined in any one of claims 1 to 14, the rail clamp (10) having a surface, the surface being for contacting the lower section (52) of the rail (12) and the rail clamp (10) being fastened to the at least one rail road saddle (16) to allow a pressure of the surface against the lower section (52) of the rail (12) to prevent substantial displacement of the rail (12).

16. The railway system according to claim 15, **characterized in that** the at least one rail clamp comprises a first plurality of rail clamps and a second plurality of rail clamps, the first plurality of rail clamps being placed on a first lateral side of the rail and the second plurality of rail clamps being placed on a second lateral side of the rail.

17. The railway system according to claim 16, **characterized in that** each rail clamp of the first plurality of rail clamps is offset from a corresponding rail clamp of the second plurality of rail clamps.

18. The railway system of claim 17, **characterized in that** the rail road saddle is anticorrosive, insulating and integrally composed of a second polymeric composition made by pultrusion, molding, casting, filament winding or winding.

## Patentansprüche

1. Schienenklemme (10) zum Befestigen der Gleisausrüstungen, wobei die Schienenklemme (10) korrosionsbeständig und isolierend ist und vollständig aus einer polymeren Zusammensetzung durch Strangziehen, durch Gießen, durch Aufwicklung oder durch Wicklung hergestellt ist und einstückig ausgebildet ist, **dadurch gekennzeichnet, dass** die polymere Zusammensetzung ein Verbundmaterial ist, das Folgendes enthält:
- ein Syntheseharz; und
- Verstärkungsfasern.

2. Schienenklemme nach Anspruch 1, **dadurch gekennzeichnet, dass** das Harz ausgewählt ist aus den Epoxidharzen, den Polyestern, den Vinylestern und den Urethanen.

3. Schienenklemme nach Anspruch 1 oder 2, **dadurch gekennzeichnet, dass** die Fasern ausgewählt sind aus Glas, Aramid, Keramik, Karton, Leinenkarton, Sisal, Baumwolle, Leinen und Hanf.

4. Schienenklemme nach einem der Ansprüche 1 bis 3, **dadurch gekennzeichnet, dass** die Verstärkungsfasern die Form von Rovings oder Matten haben.

5. Schienenklemme nach einem der Ansprüche 1 bis 4, **dadurch gekennzeichnet, dass** die polymere Zusammensetzung ein Polymer enthält, das aus den Polyestern, den Polyacetal-Homopolymeren und den Polycarbonaten ausgewählt ist.

6. Schienenklemme nach einem der Ansprüche 1 bis 5, **dadurch gekennzeichnet, dass** sie mit einer Öffnung für den Durchtritt eines Befestigungsmittels versehen ist.

7. Schienenklemme nach einem der Ansprüche 1 bis 6, **dadurch gekennzeichnet, dass** sie eine Barcol-Härte von ungefähr 40 bis 50 aufweist.

8. Schienenklemme nach einem der Ansprüche 1 bis 7, **dadurch gekennzeichnet, dass** sie einen elektrischen Widerstand nach der Norm ASTM D-229 von über 7 Ohm/cmx10¹² aufweist.

9. Schienenklemme nach einem der Ansprüche 1 bis 8, **dadurch gekennzeichnet, dass** sie einen Elastizitätsmodul zwischen 200.000 und 10.000.000 psi aufweist.

10. Schienenklemme nach einem der Ansprüche 1 bis 9, **dadurch gekennzeichnet, dass** sie eine Zugfestigkeit nach der Norm ASTM D-638 zwischen 7.000 und 120.000 psi aufweist.

11. Schienenklemme nach einem der Ansprüche 1 bis 10, **dadurch gekennzeichnet, dass** sie eine Kompressionsfestigkeit nach der Norm ASTM D-695 zwischen 12.000 und 70.000 psi aufweist.

12. Schienenklemme nach einem der Ansprüche 1 bis 11, **dadurch gekennzeichnet, dass** sie eine Scherfestigkeit von mindestens 2.000 psi aufweist.

13. Schienenklemme nach einem der Ansprüche 1 bis 12, **dadurch gekennzeichnet, dass** sie einen Wärmeausdehnungskoeffizienten von mehr als 10X10-6 In/In/°F aufweist.

14. Schienenklemme nach einem der Ansprüche 1 bis 13, **dadurch gekennzeichnet, dass** sie eine dielektrische Konstante nach der Norm ASTM D150 zwischen 4 und 7 bei 60 Hz aufweist.

15. Eisenbahnschienensystem umfassend:
- eine Schiene (12) mit einem oberen Teil (50) und einem unteren Teil (52);
- mindestens einen Sattel (16), um den unteren Teil (52) der Schiene (12) zu tragen;
wobei das Eisenbahnschienensystem **dadurch gekennzeichnet ist, dass** es mindestens eine Schienenklemme (10) umfasst, die in einem der Ansprüche 1 bis 14 definiert ist, wobei die Schienenklemme (10) eine Oberfläche hat, wobei die Oberfläche mit dem unteren Teil (52) der Schiene (12) in Kontakt gebracht wird und wobei die Schienenklemme (10) an dem Sattel (16) befestigt ist, um einen Druck der Oberfläche gegen den unteren Teil (52) der Schiene (12) zu ermöglichen, um der substantiellen Bewegung der Schiene (12) vorzubeugen.

16. Eisenbahnschienensystem nach Anspruch 15, **dadurch gekennzeichnet, dass** die mindestens eine Schienenklemme eine erste Vielzahl von Schienenklemmen und eine zweite Vielzahl von Schienenklemmen umfasst, wobei die erste Vielzahl von Schienenklemmen an einer ersten Seitenfläche der Schiene und die zweite Vielzahl von Schienenklemmen an einer zweiten Seitenfläche der Schiene angeordnet ist.

17. Eisenbahnschienensystem nach Anspruch 16, **dadurch gekennzeichnet, dass** jede Schienenklemme der ersten Vielzahl von Schienenklemmen relativ zu einer entsprechenden Schienenklemme der zweiten Vielzahl von Schienenklemmen versetzt ist.

18. Eisenbahnschienensystem nach Anspruch 17, **dadurch gekennzeichnet, dass** der Sattel korrosionsbeständig und isolierend ist und vollständig aus einer zweiten polymeren Zusammensetzung durch Strangziehen, durch Gießen, durch Aufwicklung oder durch Wicklung hergestellt ist.
